# EUROPEAN PATENT SPECIFICATION

(11) **EP 4 270 997 B1**
(45) Date of publication and mention of the grant of the patent: **02.09.2026**
(21) Application number: 22169922.6
(22) Date of filing: 26.04.2022
(51) Int. Cl.: H04W 4/029

(54) **METHOD FOR PREDICTING TRAFFIC PARTICIPANT BEHAVIOR, DRIVING SYSTEM AND VEHICLE**
VERFAHREN ZUR VORHERSAGE DES VERHALTENS EINES VERKEHRSTEILNEHMERS, FAHRSYSTEM UND FAHRZEUG
PROCÉDÉ DE PRÉDICTION DE COMPORTEMENT DE PARTICIPANTS DE TRAFIC, SYSTÈME DE CONDUITE ET VÉHICULE

(43) Date of publication of application: 01.11.2023
(73) Proprietor: AUMOVIO Germany GmbH, 60488 Frankfurt am Main (DE)
(72) Inventor: Dr. Reichardt, Jörg, 90411 Nürnberg (DE)
(74) Representative: Aumovio Corporation

(56) References cited:
- WO-A1-2021/062596
- US-A1- 2019 025 841
- US-A1- 2022 169 263

## Description

### TECHNICAL FIELD

The invention relates to a method for predicting traffic participant behavior, to a driving system, in particular a driver assistance system and/or an autonomous driving system, configured to execute the method for predicting traffic participant behavior, and to a vehicle comprising said driving system.

### BACKGROUND

In order to provide safe and/or comfortable driving, driving systems such as driver assistance systems and/or autonomous driving systems need anticipatory planning. In this context, anticipatory means that the driving system is able to incorporate expectations about the future motion of dynamic agents, i.e., traffic participants, in the surroundings of the vehicle.

In general, the driving system does not have access to motion plans of the agents in the environment and the agents rarely actively signal their intents unequivocally. Hence, to predict the future behavior of the agents, the driving system has to make inferences based on past observations.

Simple extrapolations based on the kinematic states (position, velocity, acceleration) of the agents are typically valid only up to approximately 2s into the future. However, longer predictions would be beneficial for the driving system.

Known trajectory prediction systems often make a prediction based on past observations only and new predictions are made without evaluating the past predictions in the light of whether they are supported by observations gathered since the prediction was made, i.e., they do not integrate with tracking algorithms.

Other known trajectory prediction systems generate the trajectory predictions forward in time from current observations. This leads to the accumulation of prediction errors, is computationally costly and often leads to dynamically unfeasible trajectories.

Exemplary motion planning approaches are described in US 2022/169263 A1 and US 2019/025841 A1.

### SUMMARY

It is therefore an object of the present invention to provide an improved method for predicting traffic participant behavior, a corresponding driving system as well as a vehicle comprising such a driving system.

The object of the present invention is solved by the subject-matter of the independent claims, wherein further embodiments are incorporated in the dependent claims.

According to a first aspect of the invention, a method for a driving system and for predicting traffic participant behavior is provided. In this context, traffic may refer to land traffic and exemplary traffic participants are pedestrians, bicyclists, motorcycles, cars and trucks. Alternatively, or additionally, traffic may refer to air traffic, wherein exemplary traffic participants are planes, helicopters, air ships, hot-air balloons and drones, and/or to sea traffic, wherein exemplary traffic participants are ships. Further, in this context, behavior refers to the motion of the traffic participant, e.g., to its position, velocity and/or acceleration.

According to the method, a first kinematic state distribution of at least one traffic participant at a first time is obtained. Here, the first time is preferably the current time or a time just before the current time, i.e., at most a second, preferably a fraction of a second before the current time. That is, the first kinematic state distribution is obtained in real time.

In particular, the first kinematic state distribution is a distribution of first kinematic state variables, wherein a probability density is assigned jointly to all first kinematic state variables.

Further, second kinematic state distributions of the at least one traffic participant are projected, wherein the kinematic state variables of the second kinematic state distributions are the kinematic state variables of the at least one traffic participant at a second time. The second time is a first time span into the future from the first time, i.e., the difference of the second time and the first time is the first time span. The second kinematic state distributions may be, for each traffic participant, continuous and/or disjoint distributions of kinematic state variables.

Then, a distribution of trajectories is defined, wherein each trajectory of the distribution of trajectories links a kinematic state of the first kinematic state distribution to a kinematic state of the second kinematic state distribution. That is, each trajectory is such that when the trajectory is evaluated at the first time, it has a kinematic state of the first kinematic state distribution, and when the trajectory is evaluated at the second time, it has a kinematic state of the second kinematic state distribution. Also, the intermediate kinematic states are given by the trajectory, i.e., both a path of the traffic participant and the motion along this path are given by the trajectory.

Further, a third kinematic state distribution of the at least one traffic participant is obtained, the third kinematic state distribution being the probability distribution of kinematic states at a third time. The third time is a second time span later than the first time, wherein the second time span is shorter than the first time span. In particular, the second time span is much shorter than the first time span. As an example, the second time span may correspond to the time between two consecutive determinations of the kinematic state distributions, i.e., the third kinematic state distribution is the next iteration of determined probabilities of kinematic states after the first kinematic state distribution. As another example, the second time span may be a fraction of a second, e.g., one tenth of a second or half a second, or even one second.

Then, the trajectories of the distribution of trajectories are evaluated at the third time, i.e., kinematic states are determined that correspond to the trajectories at the third time. Compatibilities between the third kinematic state distribution and the distribution of kinematic state variables resulting from evaluating the trajectories at the third time are determined. That is, it is determined whether or not the trajectories are compatible with the obtained third kinematic states, i.e., with which probability the third kinematic states lie on the trajectories.

Based on said determined compatibilities, probabilities are assigned to the trajectories of the distribution of trajectories, i.e., the probability distribution of the trajectories is updated. And since the trajectories correspond to the second kinematic states, the assignment of probabilities to the trajectories of the distribution of trajectories corresponds to an assignment of probabilities to the kinematic states of the second kinematic state distributions. The assignment of the probabilities may be performed as a likelihood computation in a Bayesian way. In particular, some trajectories and/or second kinematic states will be determined as being more likely and other trajectories and/or second kinematic states will be determined as being less likely. The method further comprises controlling an ego vehicle based on the distribution of trajectories

Since the second kinematic state distribution is the only projection made and the remainder of the kinematic states is determined from the trajectories that correspond to the second kinematic states, a good computational efficiency is obtained by the method.

As different trajectories may correspond to different maneuvers, e.g., lane change or keep lane, estimating probabilities for different trajectories allows estimating maneuver probabilities with a solid statistical approach.

According to an embodiment, the kinematic state variables of the first, second and/or third kinematic state distribution comprise at least one out of a group, the group consisting of a position, a velocity, an acceleration and a jerk, wherein the jerk is the third temporal derivative of the position. It is understood that the choice out of said group does not necessarily have to be the same for the first, second and/or third kinematic state distribution; however, in a preferred embodiment, each kinematic state of the first, second and third kinematic state distribution comprises the position, the velocity and the acceleration. Of course, the kinematic states of the first, second and/or third kinematic state distribution may also comprise even higher temporal derivatives of the position, however, these higher derivatives are increasingly difficult to obtain or the uncertainty in these higher derivatives is very large. For land and sea vehicles, it is often sufficient to restrict the kinematic states to two dimensions, i.e., to the horizontal plane. On the other hand, for air vehicles, the kinematic states should also include the vertical dimension.

According to an embodiment, the at least one traffic participant is an ego vehicle and/or at least one other traffic participant. In this context, vehicle may be any land, air or sea vehicle, and even a pedestrian with a smart device configured to execute the method may be referred to as "vehicle". As an example, the method may be performed for all traffic participants that can be detected by sensors of the ego vehicle. As another example, the method may be performed for all traffic participants within a predetermined radius around the ego vehicle that can be detected by the sensors of the ego vehicle. Said predetermined radius may depend, e.g., on the velocity of the ego vehicle. As yet another example, the method may be performed for at most a predetermined number of traffic participants that are closest to the ego vehicle. And as yet another example, the method may be performed on all traffic participants that may come close to the ego vehicle by the second time.

According to an embodiment, the first kinematic state distribution and/or the third kinematic state distribution of the at least one traffic participant are obtained from tracking the at least one traffic participant. Here, the tracking is performed using sensors of the ego vehicle, such as cameras, lidar and/or radar. In particular, the tracking is performed with a multi-object multi-hypotheses tracker that keeps track of the identification of objects with observations. Of course, if the at least one traffic participant is the ego vehicle, the first and/or third kinematic state distribution may be determined, e.g., via measurements of the speedometer, measurements of a steering wheel angle, measurements taken by an inertial measurement unit, or the like. In this case, the first and/or third kinematic state distribution may be very narrow, with a width of the probability distribution corresponding to the uncertainty in the above mentioned measurements.

According to an embodiment, in the step of projecting the second kinematic state distribution, interactions of the at least one traffic participant with a static environment are accounted for. For this, the data pertaining to the static environment may be provided, e.g., from maps and/or from the vehicle sensors. As an example, possible second kinematic states for motor vehicles may be chosen only on roads and not on sidewalks, inside buildings (except for parking garages) or on meadows. The possible kinematic states of the second kinematic state distribution may be further restricted to the correct side of the road - unless passing is allowed and indicated, e.g., by a slower preceding vehicle - or according to further traffic rules. Further, the possible kinematic states of the second kinematic state distribution may be restricted to such states that result in a trajectory that has feasible kinematic properties, e.g., that does not exceed the top speed of the vehicle or that does not exceed possible accelerations of the vehicle. These rules often lead to several localized peaks in the second kinematic state distribution, which result in multi-modal distributions.

Additionally, or alternatively, the interaction of traffic participants with each other may be accounted for. Here, for example, it may be accounted for that the traffic participants avoid a crash. As another example, different behavior of one traffic participant may lead to a different situation for another traffic participant. As a specific example, if a slow preceding vehicle turns right at an intersection, there is no need to pass said vehicle when going straight. As another example, traffic rules call for different behavior at an intersection, depending on whether another traffic participant turns right, goes straight or turns left. When these rules are applied, there will be several localized peaks in the second kinematic state distribution for each traffic participant and, as indicated above, these peaks will depend on the second kinematic state distributions of other traffic participants. Hence, the resulting probability distributions are multi-object multi-modal distributions.

According to an embodiment, the first time span is between 3 s and 10 s, in particular approximately 5 s. Shorter first time spans would not provide much information beyond a simple kinematic extrapolation of the kinematic states. Longer time spans, however, cannot be reliably predicted since they provide time for several changes in the behavior of each traffic participant, and there is not enough evidence to accurately predict said changes. Further, a time span of 10 s, and even of 5 s, is usually sufficient to provide safe and comfortable driving.

According to an embodiment, the trajectories of the distribution of trajectories are given using a parametric trajectory representation. That is, the trajectories are not a set of points in the kinematic space but are given as a function of time, wherein said function of time depends on a number of parameters. Since each trajectory has to link a kinematic state of the first kinematic state distribution to a kinematic state of the second kinematic state distribution, the trajectory evaluated at the first time has to return the kinematic state of the first kinematic state distribution and the trajectory evaluated at the second time has to return the kinematic state of the second kinematic state distribution. Hence, the parameters for a trajectory have to be chosen such that these requirements are fulfilled. Unless there is some degeneracy and in order to provide a unique definition of the trajectory, the number of parameters has to equal the number of boundary values. As an example, if for each of the kinematic states of the first and second kinematic state distributions position, velocity and acceleration are given, there are three boundary values per space dimension from the kinematic state of the first kinematic state distribution and three boundary values per space dimension from the kinematic state of the second kinematic state distribution. Hence, there are a total of six boundary values per space dimension and for a unique definition of the trajectory, the number of parameters of the parametric representation has to be six times the number of space dimensions.

According to an embodiment, the trajectories are given as a linear combination of a predetermined number of basis functions. Hence, the parameters are the coefficients of each of the basis functions. In this case, it also suffices to evaluate the basis functions and their derivatives (first and second, if the kinematic states of the first and second kinematic state distributions comprise position, velocity and acceleration) once for the first time and once for the second time. Then, the problem of finding the parameters reduces to a simple linear equation system.

In particular, the predetermined number is between 5 and 8, most particularly 6 per space dimension. 5 basis functions per space dimension correspond, e.g., to the position, velocity and acceleration for the kinematic states of the first kinematic state distribution and the position and velocity for the kinematic states of the second kinematic state distribution. 6 basis functions per space dimension correspond, e.g., to the position, velocity and acceleration for the kinematic states of both the first and second kinematic state distributions. And 8 basis functions per space dimension correspond, e.g., to the position, velocity, acceleration and jerk for the kinematic states of both the first and second kinematic state distributions. In many cases, 6 basis functions per space dimension is the optimal trade-off between accuracy and available kinematic state data. Less than 5 basis functions per space dimension lead to a loss of accuracy and more than 8 basis functions per space dimension are usually not supported by the available kinematic state data.

According to an embodiment, the basis functions are monomials, i.e., the trajectories are given as $x \left(t\right) = {\sum }_{i = 0}^{N - 1} {a}_{i} {t}^{i}$, and similarly for the other space dimensions, wherein N is the number of basis functions and aᵢ are the coefficients. For many applications, this simple approach yields an excellent parametrization of the trajectory.

Alternatively, the basis functions are Bernstein polynomials, i.e., ${b}_{i , N} \left(t\right) = \left(\begin{matrix}N \\ i\end{matrix}\right) {t}^{i} {\left(1-t\right)}^{N - i}$ . Here, the first time and the second time have to be scaled such that for the first time, t = 0, and for the second time, t = 1. This approach makes parameter values particularly intuitive and interpretable.

According to an embodiment, the steps of determining compatibilities between the third kinematic state distribution and a distribution of kinematic state variables resulting from evaluating each of the trajectories of the distribution of trajectories at the third time and assigning probabilities to the trajectories of the distribution of trajectories based on the determined compatibilities are solved as follows.

First, a cost function is set up. This cost function depends on traffic participants xⱼ at the first time, which are the traffic participants for which the first kinematic state distributions have been obtained, but may also encompass traffic participants xⱼ that have not yet been detected at the first time. Here, the index j equals the number of detected traffic participants at the first time plus a number of yet undetected traffic participants. The cost function also depends on future options o^{f}_{j,k_j} of the traffic participants xⱼ at the second time, wherein said future options are discrete options of the second kinematic state distributions. Finally, the cost function depends on the traffic participants oᵢ detected at the third time, i.e., the traffic participants for which the third kinematic state distributions have been obtained.

The cost function is then given as the negative log likelihood of the probability that an observation oᵢ is made for an object xⱼ that has the future option o^{f}_{j,k_j}:${C}_{ijk_j} = - ln P \left({o}_{i}|{x}_{j}, {{o}^{f}}_{j , k_j}\right)$.

The data association problem related to this cost function would be to find the minimum ${min}_{X} {\sum }_{ijk _ j} {C}_{ijk _ j} {X}_{ijk _ j}$, wherein the data association matrix X_{ijk_j} has the properties Σ*_{jk_j} X_{ijk_j}* = 1 for all i and Σ*_{ik_j} X_{ijk_j}* ≤ 1 for all j. In particular, the data association matrix only has the entries 0 and 1.

In order to solve the data association problem using the standard algorithms known from multi-object multi-hypotheses trackers, the cost function is minimized with respect to the discrete options of the second kinematic state distributions, i.e., with respect to k_j, to obtain the minimized cost function $C {′}_{ij} = {min}_{k _ j} {C}_{ijk _ j}$*.* The options of the second kinematic state distributions that lead to each entry of the minimized cost function are given by $k {′}_{ij} = arg {min}_{k _ j} {C}_{ijk _ j}$. Assignments of objects to observations given the future options may then be given by a list of tuples (i, j, k_j).

Finally, standard multi-object multi-hypotheses tracker algorithms are applied to find the minimum or a predetermined number of (lowest) minima of the minimized cost function, i.e., the equation ${min}_{X} {\sum }_{ij} C {′}_{ij} {X}_{ij}$ is solved, where X is once again a data association matrix with Σ*ⱼ Xᵢⱼ* = 1 for all i and Σ*ᵢ Xᵢⱼ* ≤ 1 for all j.

Since said efficient standard multi-object multi-hypotheses tracker algorithms are available, the computational cost of the minimization of the cost function is low compared to a direct solution of the original minimization problem ${min}_{X} {\sum }_{ijk _ j} {C}_{ijk _ j} {X}_{ijk _ j}$*.*

According to an embodiment, the method further comprises predicting fourth kinematic state distributions of the at least one traffic participant. Here, the fourth kinematic state distributions comprise probability distributions of the kinematic states at a fourth time. In particular, said fourth time is between the third time and the second time, i.e., in the future, but bounded by the second time. Said fourth kinematic state distributions are obtained from evaluating each of the trajectories of the distribution of trajectories at the fourth time, as already explained above. The probabilities for the kinematic states of the fourth kinematic state distributions are then determined through the probabilities given by the distribution of trajectories.

According to an embodiment, the predicted fourth kinematic state distributions are multi-modal distributions. This is, in particular, the case when the second kinematic state distributions are already multi-modal distributions, e.g., due to the requirements from the interactions with the static environment. In particular, the fourth kinematic state distributions are multi-object multi-modal distributions. This is, in particular, the case when the second kinematic state distributions are already multi-object multi-modal distributions, e.g., due to the requirements from the interactions with each other. It has to be noted that, in this case, the probabilities of these distributions are usually joint probabilities to which no factorization applies.

According to an embodiment, the method further comprises controlling the ego vehicle based on the distribution of trajectories and/or based on the fourth kinematic state distributions. That is, the predicted trajectories of the ego vehicle and the other traffic participants are used to find the trajectories that lead to the safest, most comfortable, most efficient and/or fastest driving. Then, the ego vehicle is controlled - e.g., the speed and the direction is adjusted - such that it is moved along the corresponding trajectory for the ego vehicle. For this, the method provides a fast and reliable prediction of the trajectories.

According to a second aspect of the invention, a driving system is provided. Said driving system may be a driver assistance system and/or an autonomous driving system. The driving system is configured to execute the method according to the above description. Hence, in particular, the driving system predicts a distribution of trajectories of traffic participants and chooses the trajectory that provides the safest, most comfortable, most efficient and/or fastest driving for the ego vehicle.

According to a third aspect of the invention, a vehicle comprising a driving system according to the above description is provided. Hence, the driving system of the vehicle provides the safest, most comfortable, most efficient and/or fastest driving for the ego vehicle.

### BRIEF DESCRIPTION OF THE DRAWINGS

These and other aspects of the invention will be apparent from and elucidated further with reference to the embodiments described by way of examples in the following description and with reference to the accompanying drawings, in which
- Fig. 1: shows a flowchart of a method for predicting traffic participant behavior;
- Fig. 2: shows a flowchart of a method for controlling a vehicle based on predicted traffic participant behavior;
- Fig. 3: shows a top view of an ego vehicle at an intersection; and

It should be noted that the figures are purely diagrammatic and not drawn to scale. In the figures, elements which correspond to elements already described may have the same reference numerals. Examples, embodiments or optional features, whether indicated as non-limiting or not, are not to be understood as limiting the invention as claimed.

### DESCRIPTION OF EMBODIMENTS

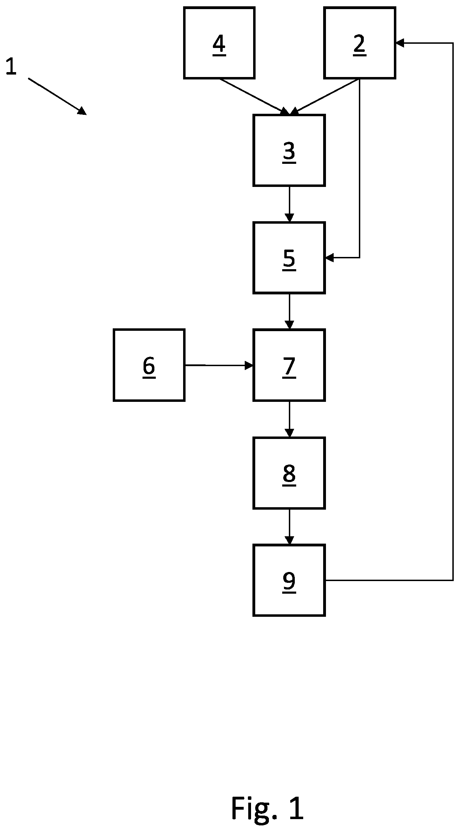

Figure 1 shows a flowchart of a method 1 for predicting traffic participant behavior. In step 2 of said method, a first kinematic state distribution of at least one traffic participant at a first time is obtained. The kinematic states of the first kinematic state distribution may be at least one out of a position, velocity, acceleration or jerk. The at least one traffic participant may be an ego vehicle and/or another traffic participant. The traffic participants may be land vehicles such as pedestrians, bicyclists, motorcycles, cars and trucks, air vehicles such as planes, helicopters, air ships, hot-air balloons and drones, and/or sea vehicles such as ships. Obtaining the first kinematic state distribution may be performed using sensors of the ego vehicle, such as cameras, lidar and/or radar and tracking the at least one traffic participant, in particular with a multi-object multi-hypotheses tracker.

In step 3 of the method, second kinematic state distributions of the at least one traffic participant at a second time are projected. Here, the second time is a first time span into the future from the first time. Said first time span may be between 3 s and 10 s, in particular around 5 s. The kinematic states of said projected second kinematic state distributions may also be referred to as pseudo-observations.

For the projection of the second kinematic state distributions, interactions of the at least one traffic participant with a static environment 4 are accounted for. That is, path options are generated based, e.g., on maps and/or on sensor readings. In particular, kinematic states within the second kinematic state distributions are excluded if they are not allowed.

Also, for the projection of the second kinematic state distributions, interactions with other traffic participants are taken into account, wherein the data for the other traffic participants comes from the first kinematic state distribution obtained in step 2.

Based on the first kinematic state distribution obtained in step 2 and the second kinematic state distributions projected in step 3, a distribution of trajectories, wherein each trajectory of the distribution of trajectories links a kinematic state of the first kinematic state distribution to a kinematic state of the second kinematic state distribution, is defined in step 5. Said trajectories of the distribution of trajectories may, in particular, be given using a parametric trajectory representation, more particularly as a linear combination of a predetermined number of basis functions. If, for example, the kinematic states of the first and second kinematic state distributions each comprise a position, a velocity and an acceleration, there have to be six basis functions per spatial dimension such that the trajectory is uniquely defined.

Further, step 5 comprises predicting a distribution of kinematic states resulting from evaluating each of the trajectories of the distribution of trajectories at a third time, wherein the third time is a second time span later than the first time and wherein the second time span is shorter than the first time span. Hence, the third time is between the first time and the second time. In step 5, in order to keep track of probabilities, a Kalman filter may be used.

In step 6, a third kinematic state distribution of the at least one traffic participant is obtained at the third time. This is performed similar to obtaining the first kinematic state distribution, in particular new observations from the sensors are evaluated.

In step 7, compatibilities between the third kinematic state distribution directly obtained in step 6 and the distribution of kinematic states at the third time obtained from the evaluation of the distribution of trajectories in step 5 are determined. In particular, a data association cost matrix is set-up and the corresponding data association problem is solved.

With the solution of the data association problem, a Kalman update step for a trajectory tracker is performed in step 8. Then, the probabilities of the distribution of trajectories is updated in step 9, wherein in particular a list of a predetermined number M of most likely kinematic states in the first kinematic state distribution as well as of most likely kinematic states in the third kinematic state distribution is updated. Hence, a prediction of the traffic participant behavior has been made.

The updated probabilities of step 9 may then be used again as input for step 2.

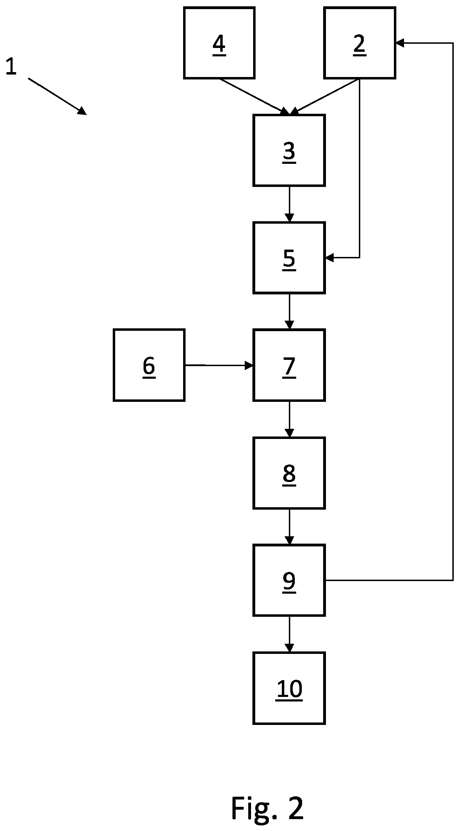

Figure 2 shows a flowchart of a method 1 for controlling a vehicle based on predicted traffic participant behavior. The steps 2 to 9 of this method are identical to the method 1 for predicting traffic participant behavior. However, the results of step 9 are used as input for a driving system, in particular a driver assistance system and/or an autonomous driving system, for controlling the ego vehicle in step 10.

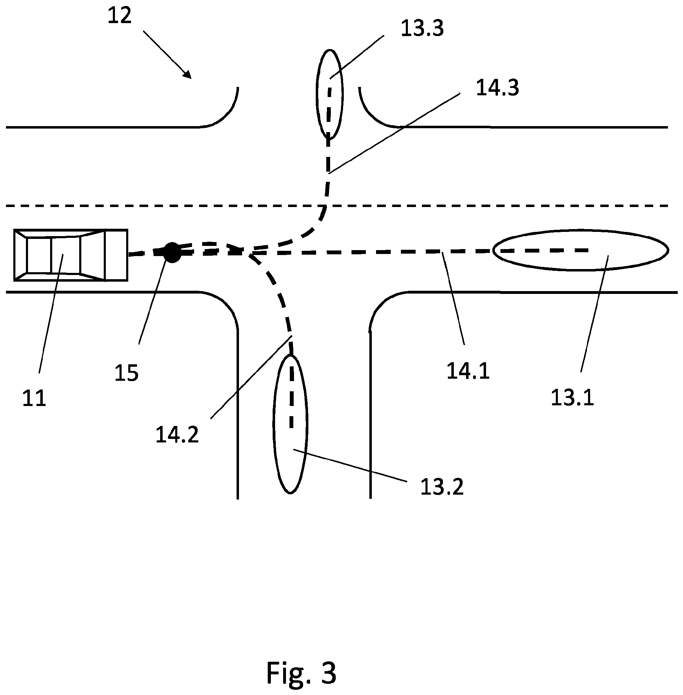

As an example, Figure 3 shows a top view of an ego vehicle 11 at an intersection 12. Second kinematic state distributions 13 of the ego vehicle 11 comprise three discrete options 13.1, 13.2 and 13.3, wherein the first option 13.1 corresponds to the vehicle going straight, the second option 13.2 corresponds to the vehicle turning right and the third option 13.3 corresponds to the vehicle turning left. For each of these discrete options 13.1, 13.2 and 13.3, trajectories 14.1, 14.2 and 14.3, respectively, are shown that link the current position of the ego vehicle, i.e., a first kinematic state, to the kinematic states of the second kinematic state distributions.

When a third kinematic state distribution 15 is obtained at a later time, the compatibility of said third kinematic state distribution 15 with the trajectories 14 evaluated at said later time may be used to predict the future behavior of the ego vehicle.

When more than one traffic participant is involved, i.e., at least one traffic participant other than the ego vehicle, the second kinematic state distributions of the vehicles depend on one another and probabilities of different discrete options do, in general, not factorize.

Other variations to the disclosed embodiments can be understood and effected by those skilled in the art in practicing the claimed invention, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 1: method for predicting traffic participant behavior
- 2: obtaining a first kinematic state distribution
- 3: projecting a second kinematic state distribution
- 4: static environment
- 5: defining a distribution of trajectories
- 6: obtaining a third kinematic state distribution
- 7: determining compatibilities
- 8: updating a trajectory tracker
- 9: updating distribution of trajectories
- 10: controlling an ego vehicle
- 11: ego vehicle
- 12: intersection
- 13: second kinematic state distributions
- 13.1 - 13.3: first to third option
- 14: distribution of trajectories
- 14.1 - 14.3: first to third option
- 15: third kinematic state distribution

## Claims

1. Method for a driving system and for predicting traffic participant behavior, comprising:
obtaining a first kinematic state distribution of at least one traffic participant at a first time;
projecting second kinematic state distributions (13) of the at least one traffic participant at a second time, the second time being a first time span into the future from the first time;
defining a distribution of trajectories (14), wherein each trajectory of the distribution of trajectories (14) links a kinematic state of the first kinematic state distribution to a kinematic state of the second kinematic state distribution (13);
obtaining a third kinematic state distribution (15) of the at least one traffic participant at a third time, the third time being a second time span later than the first time, wherein the second time span is shorter than the first time span;
determining compatibilities between the third kinematic state distribution (15) and a distribution of kinematic states resulting from evaluating each of the trajectories of the distribution of trajectories (14) at the third time;
assigning probabilities to the trajectories of the distribution of trajectories (14) based on the determined compatibilities; and
controlling an ego vehicle based on the distribution of trajectories.

2. Method according to claim 1, wherein the kinematic states of the first, second (13) and/or third (15) kinematic state distribution comprise at least one out of a group, the group consisting of a position, a velocity, an acceleration and a jerk.

3. Method according to claim 1 or 2, where the at least one traffic participant is an ego vehicle (11) and/or at least one other traffic participant.

4. Method according to any of claims 1 to 3, wherein the first kinematic state distribution and/or the third kinematic state distribution (15) of the at least one traffic participant are obtained from tracking the at least one traffic participant, in particular with a multi-object multi-hypotheses tracker.

5. Method according to any of claims 1 to 4, wherein in the step of projecting the second kinematic state distribution (13), interactions of the at least one traffic participant with a static environment and/or with each other are accounted for.

6. Method according to any of claims 1 to 5, wherein the first time span is between 3 s and 10 s, in particular approximately 5 s.

7. Method according to any of claims 1 to 6, wherein the trajectories of the distribution of trajectories (14) are given using a parametric trajectory representation.

8. Method according to claim 7, wherein the trajectories of the distribution of trajectories (14) are given as a linear combination of a predetermined number of basis functions, and wherein, in particular, the predetermined number is between 5 and 8, most particularly 6 per space dimension.

9. Method according to claim 8, wherein the basis functions are monomials or Bernstein polynomials.

10. Method according to any of claims 1 to 9, wherein the steps of
determining compatibilities between the third kinematic state distribution (15) and a distribution of kinematic states resulting from evaluating each of the trajectories of the distribution of trajectories (14) at the third time; and
assigning probabilities to the trajectories of the distribution of trajectories (14) based on the determined compatibilities
comprise
setting up a cost function;
minimizing the cost function with respect to discrete options of the second kinematic state distributions (13); and
applying standard multi-object multi-hypotheses tracker algorithms to find the minimum and/or minima of the minimized cost function.

11. Method according to any of claims 1 to 10, the method (1) further comprising:
predicting fourth kinematic state distributions of the at least one traffic participant at a fourth time, the fourth time being, in particular, between the third time and the second time, wherein kinematic states of the fourth kinematic state distribution are obtained from evaluating each trajectory of the distribution of trajectories (14) at the fourth time, using the probabilities of the trajectories given by the distribution of trajectories (14).

12. Method according to claim 11, wherein the predicted fourth kinematic state distributions are multi-modal distributions, in particular multi-object multi-modal distributions.

13. Method according to any of claims 1 to 12, the method (1) further comprising:
controlling the ego vehicle (11) based on the distribution of trajectories (14) and/or based on the predicted fourth kinematic state distributions.

14. Driving system, in particular driver assistance system and/or autonomous driving system, configured to execute the method (1) according to claim 13.

15. Vehicle comprising a driving system according to claim 14.

## Patentansprüche

1. Verfahren für ein Fahrsystem und zum Vorhersagen des Verhaltens eines Verkehrsteilnehmers, umfassend:
Erhalten einer ersten kinematischen Zustandsverteilung mindestens eines Verkehrsteilnehmers zu einem ersten Zeitpunkt;
Projizieren zweiter kinematischer Zustandsverteilungen (13) des mindestens einen Verkehrsteilnehmers zu einem zweiten Zeitpunkt, wobei der zweite Zeitpunkt ein erster Zeitraum in der Zukunft ab dem ersten Zeitpunkt ist;
Definieren einer Verteilung von Trajektorien (14), wobei jede Trajektorie der Verteilung von Trajektorien (14) einen kinematischen Zustand der ersten kinematischen Zustandsverteilung mit einem kinematischen Zustand der zweiten kinematischen Zustandsverteilung (13) verknüpft;
Erhalten einer dritten kinematischen Zustandsverteilung (15) des mindestens einen Verkehrsteilnehmers zu einem dritten Zeitpunkt, wobei der dritte Zeitpunkt ein zweiter Zeitraum nach dem ersten Zeitpunkt ist, wobei der zweite Zeitraum kürzer als der erste Zeitraum ist;
Bestimmen von Übereinstimmungen zwischen der dritten kinematischen Zustandsverteilung (15) und einer Verteilung kinematischer Zustände, die sich aus einem Auswerten jeder der Trajektorien der Verteilung von Trajektorien (14) zu dem dritten Zeitpunkt ergibt;
Zuweisen von Wahrscheinlichkeiten zu den Trajektorien der Verteilung von Trajektorien (14) basierend auf den bestimmten Übereinstimmungen; und
Steuern eines Ego-Fahrzeugs basierend auf der Verteilung von Trajektorien.

2. Verfahren nach Anspruch 1, wobei die kinematischen Zustände der ersten, zweiten (13) und/oder dritten (15) kinematischen Zustandsverteilung mindestens eines aus einer Gruppe umfassen, wobei die Gruppe aus einer Position, einer Geschwindigkeit, einer Beschleunigung und einem Ruck besteht.

3. Verfahren nach Anspruch 1 oder 2, wobei der mindestens eine Verkehrsteilnehmer ein Ego-Fahrzeug (11) und/oder mindestens ein weiterer Verkehrsteilnehmer ist.

4. Verfahren nach einem der Ansprüche 1 bis 3, wobei die erste kinematische Zustandsverteilung und/oder die dritte kinematische Zustandsverteilung (15) des mindestens einen Verkehrsteilnehmers durch Verfolgen des mindestens einen Verkehrsteilnehmers, insbesondere mit einem Multi-Objekt-Multi-Hypothesen-Tracker, erhalten werden.

5. Verfahren nach einem der Ansprüche 1 bis 4, wobei in dem Schritt des Projizierens der zweiten kinematischen Zustandsverteilung (13) Interaktionen des mindestens einen Verkehrsteilnehmers mit einer statischen Umgebung und/oder untereinander berücksichtigt sind.

6. Verfahren nach einem der Ansprüche 1 bis 5, wobei der erste Zeitraum zwischen 3 s und 10 s, insbesondere etwa 5 s, ist.

7. Verfahren nach einem der Ansprüche 1 bis 6, wobei die Trajektorien der Verteilung von Trajektorien (14) unter Verwendung einer parametrischen Trajektoriedarstellung gegeben sind.

8. Verfahren nach Anspruch 7, wobei die Trajektorien der Verteilung von Trajektorien (14) als Linearkombination einer vorgegebenen Anzahl von Basisfunktionen gegeben sind, und wobei insbesondere die vorgegebene Anzahl zwischen 5 und 8, insbesondere 6 pro Raumdimension, ist.

9. Verfahren nach Anspruch 8, wobei die Basisfunktionen Monome oder Bernstein-Polynome sind.

10. Verfahren nach einem der Ansprüche 1 bis 9, wobei die Schritte des Bestimmens von Übereinstimmungen zwischen der dritten kinematischen Zustandsverteilung (15) und einer Verteilung kinematischer Zustände, die sich aus einem Auswerten jeder einzelnen Trajektorie der Verteilung von Trajektorien (14) zu dem dritten Zeitpunkt ergibt; und
des Zuweisens von Wahrscheinlichkeiten zu den Trajektorien der Verteilung von Trajektorien (14) basierend auf den bestimmten Übereinstimmungen Folgendes umfassen:
Einrichten einer Kostenfunktion;
Minimieren der Kostenfunktion in Bezug auf diskrete Optionen der zweiten kinematischen Zustandsverteilungen (13); und
Anwenden von Standard-Multi-Objekt-Multi-Hypothesen-Tracker-Algorithmen, um das Minimum und/oder die Minima der minimierten Kostenfunktion zu finden.

11. Verfahren nach einem der Ansprüche 1 bis 10, wobei das Verfahren (1) ferner umfasst:
Vorhersagen vierter kinematischer Zustandsverteilungen des mindestens einen Verkehrsteilnehmers zu einem vierten Zeitpunkt, wobei der vierte Zeitpunkt insbesondere zwischen dem dritten Zeitpunkt und dem zweiten Zeitpunkt ist, wobei kinematische Zustände der vierten kinematischen Zustandsverteilung durch Auswerten jeder Trajektorie der Verteilung von Trajektorien (14) zu dem vierten Zeitpunkt unter Verwendung der durch die Verteilung von Trajektorien (14) gegebenen Wahrscheinlichkeiten der Trajektorien erhalten werden.

12. Verfahren nach Anspruch 11, wobei die vorhergesagten vierten kinematischen Zustandsverteilungen multimodale Verteilungen sind, insbesondere multimodale Multi-Objekt-Verteilungen.

13. Verfahren nach einem der Ansprüche 1 bis 12, wobei das Verfahren (1) ferner umfasst:
Steuern des Ego-Fahrzeugs (11) basierend auf der Verteilung von Trajektorien (14) und/oder basierend auf den vorhergesagten vierten kinematischen Zustandsverteilungen.

14. Fahrsystem, insbesondere Fahrerassistenzsystem und/oder autonomes Fahrsystem, das zum Ausführen des Verfahrens (1) nach Anspruch 13 konfiguriert ist.

15. Fahrzeug, umfassend ein Fahrsystem nach Anspruch 14.

## Revendications

1. Procédé pour un système de conduite et pour la prédiction de comportement de participants de trafic, comprenant :
l'obtention d'une première répartition d'état cinématique d'au moins un participant de trafic à un premier instant ;
la projection de deuxièmes répartitions d'état cinématique (13) de l'au moins un participant de trafic à un deuxième instant, le deuxième instant étant un premier intervalle de temps dans le futur à partir du premier instant ;
la définition d'une répartition de trajectoires (14), dans lequel chaque trajectoire de la répartition de trajectoires (14) relie un état cinématique de la première répartition d'état cinématique à un état cinématique de la deuxième répartition d'état cinématique (13) ;
l'obtention d'une troisième répartition d'état cinématique (15) de l'au moins un participant de trafic à un troisième instant, le troisième instant étant un second intervalle de temps postérieur au premier instant, dans lequel le second intervalle de temps est plus court que le premier intervalle de temps ;
la détermination de compatibilités entre la troisième répartition d'état cinématique (15) et une répartition d'états cinématiques résultant de l'évaluation de chacune des trajectoires de la répartition de trajectoires (14) au troisième instant ;
l'attribution de probabilités aux trajectoires de la répartition de trajectoires (14) sur la base des compatibilités déterminées ; et
la commande d'un véhicule ego sur la base de la répartition de trajectoires.

2. Procédé selon la revendication 1, dans lequel les états cinématiques de la première, deuxième (13) et/ou troisième (15) répartition d'état cinématique comprennent au moins l'un parmi un groupe, le groupe étant constitué d'une position, d'une vitesse, d'une accélération et d'une secousse.

3. Procédé selon la revendication 1 ou 2, où l'au moins un participant de trafic est un véhicule ego (11) et/ou au moins un autre participant de trafic.

4. Procédé selon l'une quelconque des revendications 1 à 3, dans lequel la première répartition d'état cinématique et/ou la troisième répartition d'état cinématique (15) de l'au moins un participant de trafic sont obtenues à partir du suivi de l'au moins un participant de trafic, en particulier avec un suivi multi-hypothèses multi-objets.

5. Procédé selon l'une quelconque des revendications 1 à 4, dans lequel dans l'étape de projection de la deuxième répartition d'état cinématique (13), on tient compte des interactions de l'au moins un participant de trafic avec un environnement statique et/ou entre eux.

6. Procédé selon l'une quelconque des revendications 1 à 5, dans lequel le premier intervalle de temps est compris entre 3 s et 10 s, en particulier d'environ 5 s.

7. Procédé selon l'une quelconque des revendications 1 à 6, dans lequel les trajectoires de la répartition de trajectoires (14) sont données à l'aide d'une représentation de trajectoire paramétrique.

8. Procédé selon la revendication 7, dans lequel les trajectoires de la répartition de trajectoires (14) sont données en tant que combinaison linéaire d'un nombre prédéterminé de fonctions de base, et dans lequel, en particulier, le nombre prédéterminé est compris entre 5 et 8, tout particulièrement 6 par dimension spatiale.

9. Procédé selon la revendication 8, dans lequel les fonctions de base sont des monomiaux ou des polynômes de Bernstein.

10. Procédé selon l'une quelconque des revendications 1 à 9, dans lequel les étapes de détermination de compatibilités entre la troisième répartition d'état cinématique (15) et une répartition d'états cinématiques résultant de l'évaluation de chacune des trajectoires de la répartition de trajectoires (14) au troisième instant ; et d'attribution de probabilités aux trajectoires de la répartition de trajectoires (14) sur la base des compatibilités déterminées comprend
l'établissement d'une fonction de coût ;
la minimisation de la fonction de coût par rapport aux options discrètes des deuxièmes répartitions d'état cinématique (13) ; et
l'application d'algorithmes standards de suivi multi-hypothèses multi-objets pour trouver le minimum et/ou les minimums de la fonction de coût minimisé.

11. Procédé selon l'une quelconque des revendications 1 à 10, le procédé (1) comprenant en outre :
la prédiction de quatrièmes répartitions d'état cinématique de l'au moins un participant de trafic à un quatrième instant, le quatrième instant étant, en particulier, entre le troisième instant et le deuxième instant, dans lequel les états cinématiques de la quatrième répartition d'état cinématique sont obtenus à partir de l'évaluation de chaque trajectoire de la répartition de trajectoires (14) au quatrième instant, à l'aide des probabilités des trajectoires données par la répartition de trajectoires (14).

12. Procédé selon la revendication 11, dans lequel les quatrièmes répartitions d'état cinématique prédites sont des distributions multimodales, en particulier des distributions multimodales multi-objets.

13. Procédé selon l'une quelconque des revendications 1 à 12, le procédé (1) comprenant en outre :
la commande du véhicule ego (11) sur la base de la répartition de trajectoires (14) et/ou sur la base des quatrièmes répartitions d'état cinématique prédites.

14. Système de conduite, en particulier système d'assistance à la conduite et/ou système de conduite autonome, configuré pour exécuter le procédé (1) selon la revendication 13.

15. Véhicule comprenant un système de conduite selon la revendication 14.
